# EUROPÄISCHE PATENTANMELDUNG

(11) **EP 2 937 252 A1**
(43) Veröffentlichungstag der Anmeldung: **28.10.2015**
(21) Anmeldenummer: 15157274.0
(22) Anmeldetag: 03.03.2015
(51) Int. Cl.: B60T 8/17, B60T 8/1766, B60T 8/26

(54) **Landwirtschaftliches Nutzfahrzeug, insbesondere Traktor**

(30) Priorität: 24.04.2014 DE 102014105758
(71) Anmelder: CLAAS Tractor S.A.S., 78141 Vélizy-Villacoublay Cedex (FR)
(72) Erfinder: Fedde, Thomas, 33129 Delbrück (DE); Wieckhorst, Jan Carsten, 33098 Paderborn (DE); Surmann, Sebastian, 33824 Werther (DE); Kirchhoff, Manfred, 39221 Bördeland OT Eggersdorf (DE)
(74) Vertreter: Budach, Steffen

(57) **Zusammenfassung**

Ein landwirtschaftliches Nutzfahrzeug, insbesondere Traktor (1), mit zumindest einer Achse (3, 4), der Bodeneingriffsmittel in Form wenigstens eines Rades (10, 20, 30, 40) und/oder Raupenfahrwerks zugeordnet sind, um das Nutzfahrzeug (1) gegenüber dem Boden (2) abzustützen, und mit einem Bremssystem (9), das zum Bremsen zumindest eines Bodeneingriffsmittels (10, 20, 30, 40) wenigstens eine Bremseinrichtung (11, 21, 31, 41) aufweist, zeichnet sich aus durch eine Sensoranordnung (12, 22, 32, 42; 50, 51), mit der sich wenigstens eine an einer Achse (3, 4) in Vertikalrichtung angreifende Fahrwerkskraft (F_{Rad}; F_{Achs}) erfassen lässt, sowie eine Steuereinrichtung (6), die betreibbar ist, in Abhängigkeit der erfassten Fahrwerkskraft (F_{Rad}, F_{Achs}) das Verhalten des Bremssystems (9) zu beeinflussen.

## Beschreibung

Die Erfindung betrifft ein landwirtschaftliches Nutzfahrzeug, insbesondere einen Traktor gemäß dem Oberbegriff des Anspruchs 1.

Landwirtschaftliche Nutzfahrzeuge wie Traktoren sind zumeist mit zwei Achsen - eine Vorderachse, eine Hinterachse - ausgestattet, wobei an jeder der beiden Achsen jeweils außenseitig ein Rad angeordnet ist, über das sich der Traktor gegenüber dem Boden abstützt. Damit sich Traktoren aus einem Fahrzustand (Fahrgeschwindigkeit gegenüber dem Boden größer null) zum Stillstand (Fahrgeschwindigkeit gleich null) bringen lassen oder zumindest auf eine geringere Fahrgeschwindigkeit verzögern lassen, verfügen diese - wie für Fahrzeuge allgemein bekannt - über ein Bremssystem. Dieses weist wenigstens eine Bremseinrichtung (z.B. Scheibenbremse) auf, die zum Bremsen zumindest eines der Räder dient.

Typischerweise sind landwirtschaftliche Nutzfahrzeuge wie insbesondere Traktoren als multifunktionale Arbeitsmaschinen ausgelegt, da sie für eine Vielzahl von Anwendungen beispielsweise auf Feldern, Betriebshöfen, Straßen und Wegen usw. eingesetzt werden. Zur Durchführung unterschiedlicher Aufgaben lassen sich an Traktoren front- und/oder heckseitig über entsprechende Geräteschnittstellen unterschiedlichste Arbeitsgeräte anbauen, die dann vom Traktor geschoben, gezogen und/oder getragen (vollständig oder nur teilweise) werden. Daneben wird an Traktoren - sei es mit oder ohne angebautem Arbeitsgerät - zum Erreichen einer gewünschten Zugkraft oftmals eine gezielte Ballastierung durch anbaubare Ballastgewichte vorgenommen, unter anderem um die Traktion der angetriebenen Räder des Fahrzeugs zu verbessern. In diesem Zusammenhang sei beispielhaft auf DE 10 2012 011 265 A1 verwiesen, worin ein modular aufgebautes Ballastgewicht beschrieben ist. Die genannten Maßnahmen (Anbau von Arbeitsgeräten, Vornahme von Ballastierung) führen in der Praxis dazu, dass Traktoren mit stark variierendem Fahrzeuggewicht sowie mit in weiten Grenzen schwankender Achslastverteilung eingesetzt werden.

Die aufgrund der genannten Umstände in großem Maße veränderlichen Lastzustände eines Traktors erschweren es, die Fahrzeuge stets effektiv und sicher abzubremsen. Das Problem verschärft sich abermals aufgrund des Wunsches vieler Fahrer nach zunehmend hoch gewählten Fahrgeschwindigkeiten auf öffentlichen Straßen.

Im generellen Zusammenhang der Ballastierung von Traktoren sei noch auf WO 2013/013917 A1 verwiesen, worin ein Traktor-Kontrollsystem offenbart ist, das anhand sensorisch erfasster Parameter (Zugkraft des angebauten Arbeitsgeräts, Radlast, Fahrgeschwindigkeit) eine geeignete Ballastierung errechnet und diese dem Fahrer vorschlägt. Es wird erwähnt, dass die Ballastierung Einfluss auf Leistungseigenschaften des Traktors im Sinne von Zugkraft und Verbrauch hat. Nachteilige Auswirkungen ungünstiger Ballastierung auf das Bremsverhalten werden jedoch nicht thematisiert.

Es ist eine Aufgabe der vorliegenden Erfindung, ein Nutzfahrzeug der genannten Art anzugeben, das sich in unterschiedlichen Einsatzbedingungen, insbesondere in verschiedenen Lastzuständen, verursacht durch angebaute (geschobene, angehängte, getragene) Arbeitsgeräte und/oder Ballastierung, jeweils wirkungsvoll und sicher abbremsen lässt.

Die Aufgabe wird gelöst durch ein landwirtschaftliches Nutzfahrzeug mit den Merkmalen des Anspruchs 1. Dieses zeichnet sich aus durch eine Sensoranordnung, mit der sich wenigstens eine an einer Achse in Vertikalrichtung angreifende Fahrwerkskraft erfassen lässt, sowie eine Steuereinrichtung, die betreibbar ist, in Abhängigkeit der erfassten Fahrwerkskraft das Verhalten des Bremssystems zu beeinflussen. Erfindungsgemäß wurde dabei zunächst gesehen, dass das Verhalten landwirtschaftlicher Nutzfahrzeuge wie Traktoren beim Bremsvorgang in besonderem Maße (verglichen zu beispielsweise Personenkraftwagen) durch deren Beladung beeinträchtigt wird. Dies liegt insbesondere daran, dass landwirtschaftliche Nutzfahrzeuge abhängig von den bereits eingangs beschriebenen vielfältigen Anbau- und Einsatzmöglichkeiten ganz unterschiedliche Radlasten aufweisen können. Eine maximal mögliche Bremsverzögerung eines Rads (oder entsprechend eines Raupenfahrwerks) ist aber durch die Haftreibung des Rads begrenzt, die - neben einem bodenspezifischen Reibkoeffizienten - wesentlich durch die Radlast bestimmt wird. Weist ein Nutzfahrzeug mehrere Räder (und/oder Raupenfahrwerke) auf, die jeweils unterschiedliche Lasten tragen, so kommt diesen Bodeneingriffsmitteln jeweils eine individuelle maximal mögliche Bremsverzögerung zu.

Erfindungsgemäß wurde es als zielführende Maßnahme erachtet, mit einer geeigneten Sensoranordnung wenigstens eine an einer Achse des Nutzfahrzeugs in Vertikalrichtung angreifende Fahrwerkskraft zu erfassen. Es kann sich hierbei um eine Radkraft (auch: "Radlast") handeln, d.h. eine radspezifische Vertikalkraft, die zwischen Rad und Achse wirkt. Alternativ oder ergänzend kann es sich bei einer Fahrwerkskraft um eine Achskraft (auch: "Achslast") handeln, d.h. eine auf die gesamte Achse bezogene Vertikalkraft, die zwischen Achse und einem Tragrahmen bzw. Chassis des Nutzfahrzeugs wirkt. Verschiedene Messprinzipien zur Erfassung derartiger Kräfte sind denkbar.

Erfindungsgemäß wird die wenigstens eine erfasste Fahrwerkskraft von einer Steuereinrichtung verarbeitet und dazu genutzt, das Verhalten des Bremssystems in Abhängigkeit der Fahrwerkskraft zu beeinflussen. Aufgrund der fahrzeugeigenen Sensoranordnung ist dabei eine ständige Anpassung der Einflussnahme möglich, so dass nicht nur der statische Lastzustand des Nutzfahrzeugs (im Stand), sondern vorteilhaft auch dessen dynamischer Lastzustand laufend (d.h. während der Fahrt) erfasst und berücksichtigt werden können. Für landwirtschaftliche Nutzfahrzeuge wie Traktoren ist dies von besonderem Nutzen, da sich die statischen und dynamischen Lastverhältnisse - beispielsweise aufgrund von nur bei der Fahrt wirkenden Zugkräften zwischen Traktor und Arbeitsgerät - stark unterscheiden können.

Die erfindungsgemäß vorgesehene Einflussnahme auf das Verhalten des Bremssystems kann unterschiedlich ausfallen. Dabei kann grundsätzlich unterschieden werden zwischen einer Einflussnahme auf die Höhe der Bremsleistung des Fahrzeugs (insgesamt) und einer Einflussnahme auf die Verteilung der Bremsleistung einzelner Bremseinrichtungen untereinander.

Eine vorteilhafte Weiterbildung des Nutzfahrzeugs sieht zunächst vor, dass die Steuereinrichtung das Verhalten des Bremssystems in Abhängigkeit nicht nur einer, sondern vorzugsweise mehrerer Fahrwerkskräfte beeinflusst. Vorteilhaft ist dazu die Steuereinrichtung betreibbar, aus mehreren erfassten Fahrwerkskräften eine gesamtfahrzeugbezogene Verteilung der Achskräfte (Achslastverteilung) zu errechnen, um aus der errechneten Achslastverteilung für wenigstens zwei Bremseinrichtungen eine Vorgabe hinsichtlich der Verteilung der aufbringbaren Bremskräfte abzuleiten. So könnte beispielsweise aus den erfassten Fahrwerkskräften ermittelt werden, dass ein Drittel des Fahrzeuggewichts auf der Vorderachse lastet und zwei Drittel des Fahrzeuggewichts auf der Hinterachse lasten. Anhand dieser Achslastverteilung könnte die Steuereinrichtung beispielsweise vorgeben, dass den Bremseinrichtungen der Vorderachse ein geringerer Anteil einer Gesamtbremsleistung zukommt als den Bremseinrichtungen der Hinterachse. In diesem Fall erfolgt die Verteilung der aufbringbaren Bremskräfte also achsweise.

Zweckmäßigerweise weist das Bremssystem eine fremdkraftgesteuerte Betätigungseinrichtung, vorzugsweise ein Bremspedal auf, die zur Vorgabe eines vom Bremssystem aufzubringenden Bremsdrucks durch einen Fahrer des Nutzfahrzeugs dient. Auf für sich übliche Weise steht die Betätigungseinrichtung vorzugsweise über einen Bremskraftverstärker mit den Bremseinrichtungen in Wirkverbindung.

Gemäß einer vorteilhaften Weiterbildung der Erfindung ist weiterhin die Steuereinrichtung betreibbar, in Abhängigkeit erfasster Fahrwerkskräfte einen Wirkzusammenhang zwischen einer an der Betätigungseinrichtung aufgebrachten Fremdkraft (beispielsweise also der Pedalkraft) und einem damit vorgebbaren Bremsdruck zu beeinflussen. In diesem Fall bewirkt die Steuereinrichtung also quasi eine "lastabhängige Anpassung der Bremspedalübersetzung". Diese kann unterschiedlich gestaltet sein. Zweckmäßigerweise ist vorgesehen, dass mit zunehmender Fahrwerkskraft - also zunehmender Rad- bzw. Achslast - das Verhältnis zwischen vom Bremssystem erbrachtem Bremsdruck gegenüber an der Betätigungseinrichtung ausgeübter Fremdkraft steigt. So ist sichergestellt, dass der Fahrer das Nutzfahrzeug weitestgehend unabhängig vom Lastzustand mit der gleichen Maßnahme (gleicher Bremspedaldruck) annähernd gleich schnell verzögern kann.

Neben der beschriebenen lastabhängigen Bremsanpassung, welche das Bremsverhalten des Nutzfahrzeugs beeinflusst und somit einem Blockieren einzelner Räder sinnvoll vorbeugt, kann ergänzend vorgesehen sein, dass das Bremssystem des Nutzfahrzeugs zudem ein Antiblockiersystem umfasst. Ein Antiblockiersystem wirkt insbesondere in der Weise, dass für jedes Rad dessen Schlupf anhand eines Vergleichs einer Fahrzeuggeschwindigkeit und einer radspezifischen Winkelgeschwindigkeit abgeschätzt und die Bremskraft der betreffenden Bremseinrichtung reduziert wird, wenn der Schlupf des Rads einen Grenzwert überschreitet. Das Vorhandensein eines Antiblockiersystems trägt somit zu einer weiteren Erhöhung der Fahrsicherheit des Fahrzeugs bei.

Bei dem landwirtschaftlichen Nutzfahrzeug handelt es sich insbesondere um ein multifunktional nutzbares Fahrzeug. Entsprechend verfügt dieses vorzugsweise über zumindest eine Kupplungs- und/oder Anbaueinrichtung, mittels der sich ein Arbeitsgerät, insbesondere ein gezogenes, getragenes, geschobenes Arbeitsgerät, an das Nutzfahrzeug anbauen lässt. Als ein Arbeitsgerät sei in diesem Zusammenhang auch eine anbaubare Ballastierung zu verstehen.

Die Erfindung wird nachfolgend anhand einer Zeichnung näher erläutert. Daraus ergeben sich auch weitere Funktionen und vorteilhafte Wirkungen des Nutzfahrzeugs. In der Zeichnung zeigt:
- Fig. 1: eine schematische Ansicht eines Traktors mit einem radlastgeregelten Bremssystem,
- Fig. 2: eine schematische Ansicht einer Achslasterfassung,
- Fig. 3: eine Graphik über Zusammenhänge von Pedalkraft und Bremsdruck.

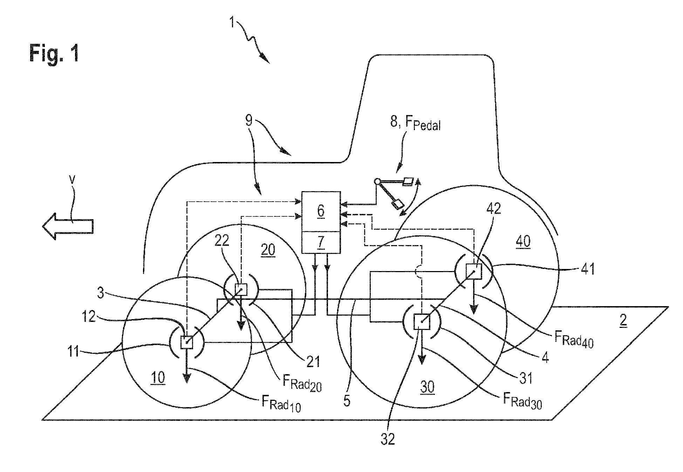

In Fig. 1 ist ein landwirtschaftliches Nutzfahrzeug in Form eines Traktors 1 in vereinfachter perspektivischer Ansicht dargestellt. Der Traktor 1 weist eine Vorderachse 3 und eine Hinterachse 4 auf, die jeweils gegenüber einem Tragrahmen 5 des Traktors 1 gelagert sind. Die Art der Achslagerung ist im Zusammenhang dieser Erfindung von untergeordneter Bedeutung; es kann sich um grundsätzlich jede Art gängiger Achslagerung handeln. Übrige für sich übliche Komponenten des Traktors 1 wie Antriebsmotor, Kupplung, Getriebe, Kühlaggregat, Fahrerkabine etc. bauen auf den Tragrahmen 5 auf, sind jedoch zur Beschränkung der Beschreibung der Erfindung auf deren wesentlichen Merkmale nicht oder nur soweit notwendig dargestellt.

Der Vorderachse 3 sind zwei Räder 10, 20 zugeordnet. Davon ist das linke Rad 10 am linken äußeren Ende der Vorderachse 3 angebracht und ist das rechte Rad 20 am rechten äußeren Ende der Vorderachse 3 angebracht.

Der Hinterachse 4 sind ebenfalls zwei Räder 30, 40 zugeordnet. Davon ist das linke Rad 30 am linken äußeren Ende der Hinterachse 4 angebracht und ist das rechte Rad 40 am rechten äußeren Ende der Hinterachse 4 angebracht.

Der Traktor 1 stützt sich somit über die vier Räder 10, 20, 30, 40 gegenüber dem Boden 2 ab. Bei Vorwärtsfahrt fährt der Traktor 1 unter Rotation der Räder 10, 20, 30, 40 mit einer Fahrgeschwindigkeit v über den Boden 2.

Zum Abbremsen ("Verzögern") des Traktors 1 aus einem Fahrzustand (Fahrgeschwindigkeit v größer null) verfügt der Traktor 1 über ein Bremssystem 9. Dazu ist jedem Rad 10, 20, 30, 40 eine Bremseinrichtung 11, 21, 31, 41 - beispielsweise in Bauform einer Trommelbremse oder Scheibenbremse - zugeordnet, mit welcher sich die Drehung des entsprechendes Rads 10, 20, 30, 40 bremsen lässt. Im gezeigten Ausführungsbeispiel sind die Bremseinrichtungen 11, 21 der Vorderräder 10, 20 über eine gemeinsame hydraulische Druckleitung an einen Bremskraftverstärker 7 angeschlossen und sind die Bremseinrichtungen 31, 41 der Hinterräder 30, 40 über eine gemeinsame hydraulische Druckleitung an den Bremskraftverstärker 7 angeschlossen. Das heißt, die Vorderräder 10, 20 und die Hinterräder 30, 40 sind jeweils mit einem gleichen Druck beaufschlagbar.

Ein für einen Fuß eines Fahrers zugängliches Bremspedal 8 (angeordnet beispielsweise am Boden einer Fahrerkabine) dient zur Vorgabe eines vom Bremssystem 9 aufzubringenden Bremsdrucks p_{B} abhängig von der Pedalkraft F_{Pedal}, die der Fahrer auf das Bremspedal 8 aufbringt. Das Bremspedal 8 ist über eine Hydraulikleitung mit einer Steuereinrichtung 6 und dem Bremskraftverstärker 7 wirkverbunden. Dabei dient der Bremskraftverstärker 7 dazu, eine durch Pedalkraft F_{Pedal} vom Fahrer aufgebrachte Kraft zu einem Bremsdruck p_{B} zu verstärken, der insgesamt auf die Bremseinrichtungen 10, 20, 30, 40 einwirken soll, um dort eine gewünschte Bremskraft zu erzielen.

Der Traktor 1 verfügt auf für sich übliche Weise (und daher nicht näher dargestellt) über front- und heckseitige Geräteschnittstellen zum Anbau unterschiedlicher Arbeitsgeräte und/oder Ballastierungen. Durch einen Anbau eines oder mehrerer solcher Geräte (oder Ballastierungen) verändern sich an jedem der Räder 10, 20, 30, 40 die Aufstandskräfte gegenüber dem Boden 2. Damit verändert sich auch die mit dem jeweiligen Rad 10, 20, 30, 40 maximal erreichbare Bremswirkung, da die Haftreibung eines Rads - neben einem bodenspezifischen Reibkoeffizienten - wesentlich durch dessen Aufstandskraft bestimmt wird. Hierbei kann differenziert werden zwischen der Aufstandskraft, die im statischen Zustand oder im dynamischen Betrieb des Traktors 1 wirkt, denn diese kann sich in der Höhe deutlich verändern (und auch während des Betriebs des Traktors 1 schwanken).

Damit das Bremssystem 9 des Traktors 1 trotz veränderlicher Radlasten eine sichere und effektive Bremsung durchführen kann, verfügt der in Fig. 1 gezeigte Traktor 1 über eine Sensoranordnung, mit der sich die an beiden Achsen 3, 4 in Vertikalrichtung angreifenden (insgesamt vier) Radkräfte F_{Rad, 10, 20, 30, 40} erfassen lassen. Zu diesem Zweck ist jedem der Räder 10, 20, 30, 40 ein Radkraftsensor 12, 22, 32, 42 zugeordnet. Dieser kann grundsätzlich nach einem beliebigen geeigneten Messprinzip arbeiten. Das Signal eines jeden Sensors 12, 22, 32, 42 geht als Eingangsgröße in die Steuereinrichtung 6 ein.

Die Steuereinrichtung 6 wiederum ist betreibbar, in Abhängigkeit der erfassten Radkräfte F_{Rad, 10, 20, 30, 40} das Verhalten des Bremssystems 9 zu beeinflussen. Eine solche Einflussnahme kann grundsätzlich auf verschiedene Weisen erfolgen. So kann die Verteilung der von einzelnen Bremseinrichtungen 11, 21, 31, 41 aufbringbaren Bremskräfte beeinflusst werden. Dadurch kann beispielsweise an einem Rad (oder an den Rädern einer Achse) die aufbringbare Bremskraft gezielt verringert werden, wenn die dortige Radlast (oder Achslast) im Verhältnis zu übrigen Radlasten (der anderen Achslast) gering ist. Ein Bremsvorgang kann somit effektiver durchgeführt werden, da die jeweils an einem Rad aufgebrachte Bremskraft in angemessenem Verhältnis zur jeweiligen Radlast steht. Konkret ist in diesem Sinne bei dem in Fig. 1 gezeigten Traktor 1 vorgesehen, dass die Steuereinrichtung 6 aus den vier erfassten Radkräften F_{Rad, 10, 20, 30, 40} zunächst eine Verteilung der Achskräfte errechnet. Aus dieser Verteilung der Achskräfte leitet die Steuereinrichtung 6 anschließend für die Bremseinrichtungen 11, 21, 31, 41 eine Vorgabe hinsichtlich der Verteilung der aufbringbaren Bremskräfte ab. Da jeweils die Bremseinrichtungen 11, 21 der Vorderachse 3 und die Bremseinrichtungen 31, 41 der Hinterachse über eine gemeinsame hydraulische Leitung versorgt werden, erfolgt somit eine achsweise Verteilung der aufbringbaren Bremskräfte in Abhängigkeit der Radkräfte F_{Rad, 10, 20, 30, 40}.

Ein praktischer Nutzen dieser lastabhängigen Bremskraftverteilung ergibt sich beispielsweise, wenn an den Traktor 1 heckseitig ein schweres Arbeitsgerät (ein Pflug) tragend angebaut ist. In diesem Fall sind die Radlasten der Hinterräder 30, 40 in stärkerem Maße erhöht als die Radlasten der Vorderräder 10, 20. Die Steuereinrichtung 6 berücksichtigt diese veränderte Lastverteilung, indem nun den Bremseinrichtungen 31, 41 der Hinterräder 30, 40 ein höherer Anteil des insgesamt im Bremssystem 9 zur Verfügung stehenden Bremsdrucks zugeteilt wird als den Bremseinrichtungen 11, 21 der Vorderräder 10, 20. Die veränderte Bremskraftverteilung hat die vorteilhafte Wirkung, dass sich der Traktor 1 effektiver bremsen lässt, da die Hinterräder 30, 40 aufgrund der stärkeren Vertikalbelastung mehr Bremsleistung übertragen können als die Vorderräder 10, 20. Eine umgekehrte Verteilung kann sich ergeben, wenn an den Traktor 1 frontseitig ein Arbeitsgerät angebaut wird.

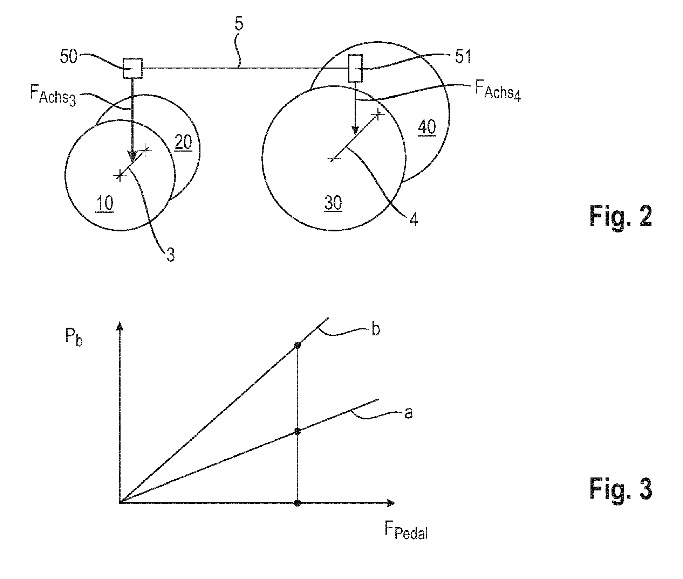

Ergänzend oder alternativ - zu einer Anpassung der Verteilung von Bremskräften - ist es bei dem Traktor 1 möglich, die Stärke der insgesamt aufbringbaren Bremskräfte abhängig von den erfassten Radkräften F_{Rad, 10, 20, 30, 40} anzupassen. Um dies zu erreichen, ist die Steuereinrichtung 6 betreibbar, in Abhängigkeit erfasster Radkräfte F_{Rad, 10, 20, 30, 40} einen Wirkzusammenhang zwischen einer am Bremspedal 8 vom Fahrer aufgebrachten Pedalkraft F_{Pedal} und einem damit vorgebbaren Bremsdruck p_{B} zu beeinflussen. Zur nachfolgenden Erläuterung sei auf Fig. 3 verwiesen.

Fig. 3 zeigt eine Graphik über Zusammenhänge von Pedalkraft F_{Pedal} und damit vorgebbarem Bremsdruck p_{B} des Bremssystems 9 in verschiedenen Lastzuständen eines Traktors 1. Befindet sich der Traktor 1 in einem unbelasteten Zustand (ohne angebaute Arbeitsgeräte/Ballastierung), so gilt zwischen der vom Fahrer am Bremspedal 8 aufgebrachten Pedalkraft F_{Pedal} und dem im Bremssystem 9 aufgebrachten Bremsdruck p_{B} ein Zusammenhang gemäß der Linie "a" in Fig. 3. Befindet sich der Traktor 1 dagegen in einem belasteten Zustand (beispielsweise sind Ballastierungen an den Traktor 1 angebracht worden), so nimmt die Steuereinrichtung 6, die über die Radlastsensoren 12, 22, 32, 42 diese Mehrbelastung erkennt, selbsttätig eine Anpassung des Zusammenhangs zwischen Pedalkraft F_{Pedal} und damit vorgebbarem Bremsdruck p_{B} vor. Im belasteten Zustand des Traktors 1 gilt dann der gemäß Linie "b" in Fig. 3 dargestellte Zusammenhang. Dieser Zusammenhang "b" beinhaltet, dass bei gleicher Pedalkraft F_{Pedal} ein höherer Bremsdruck p_{B} vorgegeben wird (als im unbelasteten Zustand gemäß Linie "a"). Mit anderen Worten, es ändert sich die "Übersetzung" - also der Effekt - des Bremspedals 8 in Abhängigkeit des Beladungszustands des Traktors. In praktischer Hinsicht hat dies den vorteilhaften Effekt, dass der Traktor im beladenen Zustand automatisch mit stärkerer Bremsleistung (höherem Bremsdruck bei gleicher Pedalbetätigung) gebremst wird als im nicht beladenen Zustand (bei sonst gleicher Fahrsituation). Dies erhöht die Fahrsicherheit des Traktors insbesondere bei höheren Fahrgeschwindigkeiten, da der Fahrer den Beladezustand des Traktors nicht zu berücksichtigen braucht, um eine gleiche Verzögerung des Fahrzeugs zu erreichen. Es sei darauf hingewiesen, dass die Graphik in Fig. 3 eine rein qualitative Darstellung der Zusammenhänge ist. Abweichend vom dargestellten proportionalen Verlauf beider Linien "a" und "b" sind progressive, degressive und/oder gemischte bzw. sonstige Kurvenverläufe denkbar.

Der in Fig. 1 schematisch dargestellte Traktor 1 ist - wie zuvor beschrieben - mit Radlastsensoren 12, 22, 32, 42 zur Erfassung von Radkräften F_{Rad, 10, 20, 30, 40} ausgestattet. Alternativ zur Radlastsensoren könnte der Traktor mit Achslastsensoren 50, 51 ausgestattet sein, wie in Fig. 3 in Teildarstellung gezeigt. Die Achslastsensoren 50, 51 erfassen vertikale Kräfte F_{Achs, 3, 4}, die zwischen Vorderachse 3 bzw. Hinterachse 4 und dem Tragrahmen 5 wirken. Die so erfassbaren Achslasten können auf vergleichbare Weise wie die Radlasten in eine wie zuvor im Zusammenhang mit Fig. 1 beschriebene Steuereinrichtung 6 eingehen, um in Abhängigkeit der erfassten Achskräfte F_{Achs, 3, 4} das Verhalten eines Bremssystems zu beeinflussen. Es besteht der Vorteil, dass sich eine Achslastverteilung des Traktors in diesem Fall bereits mit nur 50, 51 zwei Sensoren bestimmen lässt. Es sei angemerkt, dass im Rahmen der Erfindung auch eine Kombination von Sensoren (an einer Achse Radlasterfassung, an einer anderen Achse Achslasterfassung) denkbar ist.

### Bezugszeichenliste

- 1: Traktor
- 2: Boden
- 3: Vorderachse
- 4: Hinterachse
- 5: Tragrahmen
- 6: Steuereinrichtung
- 7: Verstärker
- 8: Bremspedal
- 9: Bremssystem
- 10: Rad, vorne links
- 11: Bremseinrichtung
- 12: Radlastsensor
- 20: Rad, vorne rechts
- 21: Bremseinrichtung
- 22: Radlastsensor
- 30: Rad, hinten links
- 31: Bremseinrichtung
- 32: Radlastsensor
- 40: Rad, hinten rechts
- 41: Bremseinrichtung
- 42: Radlastsensor
- 50: Achslastsensor
- 51: Achslastsensor

- F_{Rad}: Radkraft (Radlast)
- F_{Achs}: Achskraft (Achslast)
- F_{Pedal}: Pedalkraft
- p_{B}: Bremsdruck
- v: Fahrgeschwindigkeit

## Patentansprüche

1. Landwirtschaftliches Nutzfahrzeug, insbesondere Traktor (1), mit zumindest einer Achse (3, 4), der Bodeneingriffsmittel in Form wenigstens eines Rades (10, 20, 30, 40) und/oder Raupenfahrwerks zugeordnet sind, um das Nutzfahrzeug (1) gegenüber dem Boden (2) abzustützen, und mit einem Bremssystem (9), das zum Bremsen zumindest eines Bodeneingriffsmittels (10, 20, 30, 40) wenigstens eine Bremseinrichtung (11, 21, 31, 41) aufweist,
**gekennzeichnet durch** eine Sensoranordnung (12, 22, 32, 42; 50, 51), mit der sich wenigstens eine an einer Achse (3, 4) in Vertikalrichtung angreifende Fahrwerkskraft (F_{Rad}; F_{Achs}) erfassen lässt, sowie eine Steuereinrichtung (6), die betreibbar ist, in Abhängigkeit der erfassten Fahrwerkskraft (F_{Rad}, F_{Achs}) das Verhalten des Bremssystems (9) zu beeinflussen.

2. Nutzfahrzeug nach Anspruch 1, **dadurch gekennzeichnet, dass** es sich bei einer Fahrwerkskraft um eine Radkraft (F_{Rad}) handelt.

3. Nutzfahrzeug nach Anspruch 1 oder 2, **dadurch gekennzeichnet, dass** es sich bei einer Fahrwerkskraft um eine Achskraft (F_{Achs}) handelt.

4. Nutzfahrzeug nach einem der vorigen Ansprüche, **dadurch gekennzeichnet, dass** die Steuereinrichtung (6) das Verhalten des Bremssystems (9) in Abhängigkeit mehrerer Fahrwerkskräfte (F_{Rad}, _{10, 20, 30, 40}; F_{Achs, 3, 4}) beeinflusst.

5. Nutzfahrzeug nach einem der vorigen Ansprüche, **dadurch gekennzeichnet, dass** die Steuereinrichtung (6) betreibbar ist, aus mehreren erfassten Fahrwerkskräften (F_{Rad}; F_{Achs}) eine Verteilung der Achskräfte zu errechnen, um aus der errechneten Verteilung der Achskräfte für wenigstens zwei Bremseinrichtungen (11, 21, 31, 41) eine Vorgabe hinsichtlich der Verteilung der aufbringbaren Bremskräfte abzuleiten.

6. Nutzfahrzeug nach Anspruch 5, **dadurch gekennzeichnet, dass** die Verteilung der aufbringbaren Bremskräfte achsweise erfolgt.

7. Nutzfahrzeug nach einem der vorigen Ansprüche, **dadurch gekennzeichnet, dass** das Bremssystem (9) eine fremdkraftgesteuerte Betätigungseinrichtung, insbesondere ein Bremspedal (8) aufweist, die zur Vorgabe eines vom Bremssystem (9) aufzubringenden Bremsdrucks (p_{B}) durch einen Fahrer des Nutzfahrzeugs (1) dient.

8. Nutzfahrzeug nach Anspruch 7, **dadurch gekennzeichnet, dass** die Steuereinrichtung (6) betreibbar ist, in Abhängigkeit erfasster Fahrwerkskräfte (F_{Rad}; F_{Achs}) einen Wirkzusammenhang zwischen einer an der Betätigungseinrichtung (8) aufgebrachten Fremdkraft (F_{Pedal}) und einem damit vorgebbaren Bremsdruck (p_{B}) zu beeinflussen.

9. Nutzfahrzeug nach Anspruch 8, **dadurch gekennzeichnet, dass** mit zunehmender Fahrwerkskraft (F_{Rad}; F_{Achs}) das Verhältnis zwischen vom Bremssystem (9) erbrachtem Bremsdruck (p_{B}) gegenüber an der Betätigungseinrichtung (8) ausgeübter Fremdkraft (F_{Pedal}) steigt.

10. Nutzfahrzeug nach einem der vorigen Ansprüche, **dadurch gekennzeichnet, dass** das Bremssystem (9) ein Antiblockiersystem umfasst, das betreibbar ist, für jedes Rad (10, 20, 30, 40) dessen Schlupf anhand eines Vergleichs einer Fahrzeuggeschwindigkeit (v) und einer radspezifischen Winkelgeschwindigkeit abzuschätzen und die Bremskraft der Bremseinrichtung (11, 21, 31, 41) zu reduzieren, wenn der Schlupf des Rades einen Grenzwert überschreitet.

11. Nutzfahrzeug nach einem der vorigen Ansprüche, **dadurch gekennzeichnet, dass** dieses über zumindest eine Kupplungs- und/oder Anbaueinrichtung verfügt, mittels der sich ein Arbeitsgerät anbauen lässt.
